# EUROPÄISCHE PATENTSCHRIFT

(11) **EP 3 192 690 B1**
(45) Veröffentlichungstag und Bekanntmachung des Hinweises auf die Patenterteilung: **02.09.2020**
(21) Anmeldenummer: 16204622.1
(22) Anmeldetag: 16.12.2016
(51) Int. Cl.: B60K 23/08

(54) **VERFAHREN ZUM ÜBERWACHEN EINER DIFFERENTIALSPERRE**
METHOD FOR MONITORING A DIFFERENTIAL LOCK
PROCÉDÉ DE SURVEILLANCE D'UN VERROUILLAGE DE DIFFÉRENTIEL

(30) Priorität: 14.01.2016 DE 102016200402
(43) Veröffentlichungstag der Anmeldung: 19.07.2017
(73) Patentinhaber: ZF Friedrichshafen AG, 88046 Friedrichshafen (DE)
(72) Erfinder: Schuster, Michael, 94157 Perlesreut (DE)
(74) Vertreter: ZF Friedrichshafen AG

(56) Entgegenhaltungen:
- WO-A1-2015/129691
- WO-A1-2015/129697
- DE-C2- 4 327 507

## Beschreibung

Die vorliegende Erfindung betrifft ein Verfahren zum Überwachen einer automatisch betätigten formschlüssigen Differentialsperre eines Verteilergetriebes eines Fahrzeuges.

Beispielsweise aus der Druckschrift DE 43 27 507 C2 ist eine Vorrichtung zur selbstständigen Steuerung von Kupplungen im Antriebsstrang eines allradgetriebenen Geländefahrzeuges bekannt. In Fahrzeugen mit Verteilergetrieben, wie zum Beispiel Dumper, vierradgetriebene Nutzfahrzeuge oder dergleichen wird die Differentialsperre, welche als formschlüssige Klauenkupplung ausgeführt ist, automatisch zu geschaltet. Die Zuschaltung erfolgt über eine Aktorik, die anhand von verschiedenen Fahrzuständen, wie zum Beispiel Schlupf, Drehzahl, Steigung, Getriebeübersetzungen oder Ähnlichem und mit in Betracht ziehen von äußeren Einflüssen, wie zum Beispiel Fahrpedalstellung, Bremsbetätigung oder dergleichen die Differentialsperre betätigt. Da die Zuschaltung bzw. Betätigung der Differentialsperre während der Fahrt des Fahrzeuges und damit bei Differenzdrehzahlen an der Differentialsperre durchgeführt wird, wird dabei die verwendete Klauenkupplung abgenutzt. Aufgrund dieses Verschleißes können Fehlfunktionen an der Klauenkupplung, wie zum Beispiel ein sogenanntes Ratschen oder dergleichen, auftreten und auch das Verteilergetriebe beschädigen. Zudem ist es möglich, dass die Differentialsperre durch den Verschleiß ihre eigenständige Haltefunktion aufgrund des Hinterschnitts der Schaltklaue nicht mehr ausführen kann.

Aus der gattungsgemässen Druckschrift WO 2015/129691 A1 ist eine Steuervorrichtung einer Kupplung für ein Fahrzeug mit einem Vierradantrieb bekannt, bei der zum Umschalten von einem Zweiradantrieb auf den Vierradbetrieb eine Kupplung aktiviert wird, wobei nach der Aktivierung der Kupplung eine Differenzdrehzahl an der Kupplung bestimmt und ausgewertet wird.

Demnach liegt der vorliegenden Erfindung die Aufgabe zu Grunde, ein Verfahren zum Überwachen der Differentialsperre vorzuschlagen, bei dem auch der Verschleiß der Differentialsperre erfasst werden kann und ein ordnungsgemäßer Betrieb gewährleistet wird.

Diese Aufgabe wird erfindungsgemäß durch die Merkmale des Patentanspruches 1 gelöst, wobei sich vorteilhafte Ausgestaltungen aus den Unteransprüchen und der Beschreibung sowie den Zeichnungen ergeben.

Somit wird ein Verfahren zum Überwachen einer automatisch betätigten formschlüssigen Differentialsperre eines Verteilergetriebes eines Fahrzeuges vorgeschlagen, bei dem während eines Zeitintervalls zwischen dem Aktivierungszeitpunkt und dem Erreichen des geschlossenen Zustandes der Differentialsperre die an der Differentialsperre auftretende Differenzdrehzahl ausgewertet wird.

Auf diese Weise wird eine Überwachung des Aktuator-Systems bzw. der Aktorik zum Betätigen der Differentialsperre realisiert und zudem der Verschleiß an dem formschlüssigen Schaltelement bei automatischer Zuschaltung erfasst. Durch die Überwachung der Betätigung kann der Verschleiß der Differentialsperre reduziert werden. In vorteilhafter Weise kann ein schon verschlissenes Schaltelement frühzeitig erkannt werden und dadurch Beschädigungen des Verteilergetriebes oder anderer Komponenten verhindert werden. Zudem können mögliche Standzeiten des Fahrzeuges aufgrund von Wartungsarbeiten an der Differentialsperre besser eingeplant werden.

Im Rahmen des vorgeschlagenen Verfahrens werden der Verlauf und damit die maximal auftretende Differenzdrehzahl während des Zeitintervalls der Betätigung ausgewertet und für weitere Verfahrensschritte verwendet. Das Zeitintervall der Betätigung beginnt mit dem Zeitpunkt zwischen der Aktivierung der Differentialsperre, welches durch die Aktorik ausgelöst wird, und dem Zeitpunkt, an dem ein Rückmeldeschalter der Differentialsperre das Signal "Sperre geschlossen" meldet.

Zunächst kann anhand der gemessenen Differenzdrehzahl ausgewertet werden, ob eine weitergehende Überwachung notwendig ist oder die Überwachung beendet wird. Bei einer Differenzdrehzahl die unterhalb eines über einen Parameter definierten Limits liegt, wird die Überwachung beendet. Wenn jedoch die Differenzdrehzahl über diesem Limit liegt, werden weitergehende Überwachungsalgorithmen aktiviert.

Im Weiteren werden die erfassten Messwerte des Zeitintervalls ausgewertet. Wenn die Messwerte der Zeitintervalle innerhalb eines über einen Parameter definierten Limits liegen, wird die Differentialsperre als funktionsfähig erkannt. Sollten die Messwerte der Zeitintervalle außerhalb des Limits liegen, wird ein Warnsignal ausgegeben und auf einen Fehler bei der Differentialsperre hingewiesen. Das Überwachungsverfahren beruht darauf, dass sich die Zeit für die Aktivierung mit bzw. Betätigung verlängert, wenn ein Defekt im Aktuator-System bzw. an der Differentialsperre vorliegt. Dieses längere Zeitintervall kann bei mittleren sowie hohen Differenzdrehzahlen festgestellt werden. Ein Verschleiß der Differentialsperre kann erkannt werden, da bei höheren Differenzdrehzahlen die Verzahnung der Klauenkupplung nicht sofort einrückt, sondern mehrfach aufgrund von verschlissenen Kanten abgewiesen wird. Hierbei wird auch ein längeres Zeitintervall für die Betätigung bzw. Aktivierung erfasst.

Bei geringen Differenzdrehzahlen kann kein Rückschluss auf einen Defekt bemerkt werden, da es zu Zahn-Zahnstellungen kommen kann. Aufgrund von Zahn-Zahnstellungen wird die Zeit für die Aktivierung korrekterweise verlängert. Daher werden diese Zuschaltungen nicht bewertet. Demzufolge ist es für die Überwachung wichtig, die Differenzdrehzahlen während des Zeitintervalls der Betätigung der Differentialsperre zu erfassen und auszuwerten.

Das vorgeschlagene Verfahren kann in ein Steuergerät des Fahrzeuges bzw. des Getriebes implementiert werden. Vorzugsweise kann die Implementierung bei einem bereits vorhandenen Steuergerät erfolgen.

Nachfolgend wird die vorliegende Erfindung anhand der Zeichnungen weiter erläutert. Es zeigen:
Figur 1 ein schematisches Ablaufdiagramm eines erfindungsgemäßen Verfahrens zum Überwachen einer Differentialsperre mit einem ersten Überwachungsalgorithmus und einem zweiten Überwachungsalgorithmus;
Figur 2 ein schematisches Ablaufdiagramm des ersten Überwachungsalgorithmus gemäß Figur 1;
Figur 3 ein schematisches Ablaufdiagramm eines zweiten Überwachungsalgorithmus gemäß Figur 1.

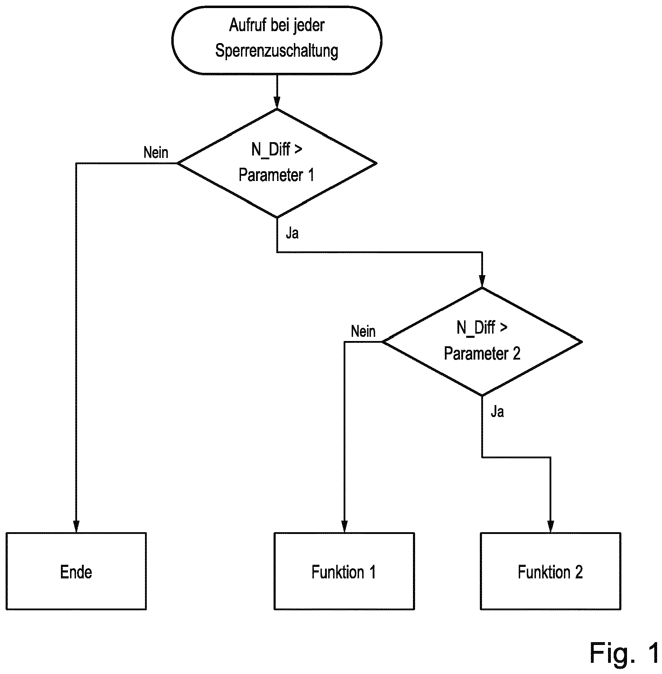

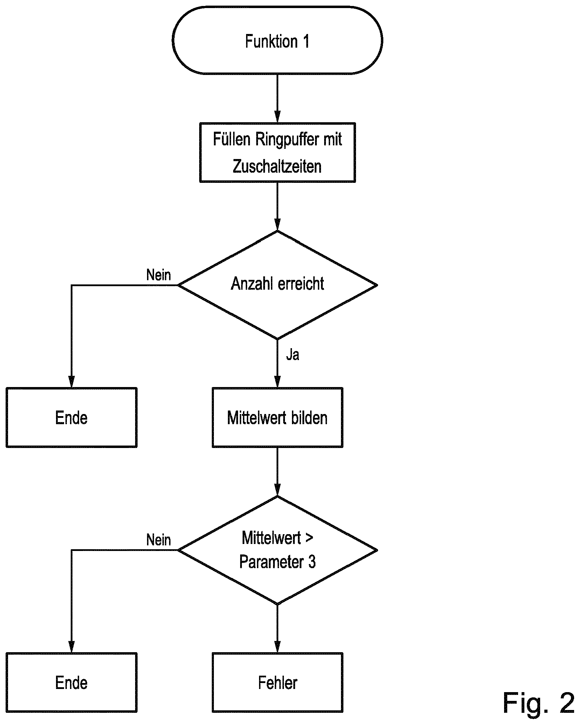

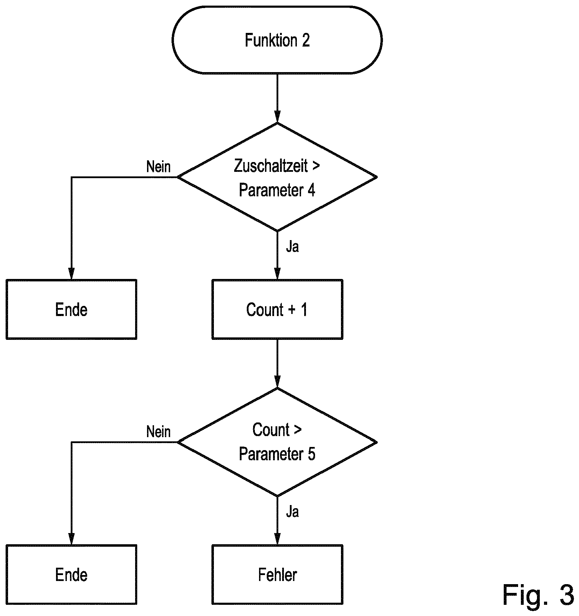

In den Figuren 1 bis 3 ist schematisch der Ablauf eines erfindungsgemäßen Verfahrens zum Überwachen einer automatisch betätigten formschlüssigen Differentialsperre eines Verteilergetriebes eines Fahrzeuges beispielhaft dargestellt. Aus den Ablaufdiagrammen wird exemplarisch die Überwachungsprozedur erläutert.

Für die Entscheidung, ob bei der Überwachung ein Fehler der Betätigung bzw. des Aktuator-Systems und/oder ein Verschleiß der Differenzialsperre vorliegt wird im Rahmen des vorgeschlagenen Verfahrens innerhalb des Zeitintervalls der Betätigung bzw. Aktivierung der Differentialsperre die Differenzdrehzahl N_Diff erfasst und ausgewertet. Die Überwachung bzw. das Überwachungsverfahren wird beendet, wenn die gemessene Differenzdrehzahl N_Diff an der Differentialsperre kleiner als ein vorbestimmter erster Grenzwert Parameter 1 ist. Bei derartigen Messergebnissen wird somit das vorgeschlagene Verfahren beendet.

Ein erster Überwachungsalgorithmus Funktion 1 wird aktiviert, wenn der Messwert der Differenzdrehzahl N_Diff an der Differentialsperre größer als der vorbestimmte erste Grenzwert Parameter 1 jedoch kleiner als ein vorbestimmter zweiter Grenzwert Parameter 2 ist. Ein zweiter Überwachungsalgorithmus Funktion 2 wird aktiviert, wenn der Messwert der Differenzdrehzahl N_Diff an der Differentialsperre größer als ein vorbestimmter zweiter Grenzwert Parameter 2 ist.

Im Rahmen des ersten Überwachungsalgorithmus Funktion 1 wird bei jeder Betätigung der Differentialsperre das Zeitintervall der Betätigung gemessen und die Messwerte aufaddiert, wobei nach dem Erfassen einer vorbestimmten Anzahl von Messwerten des Zeitintervalls ein Mittelwert gebildet wird, wobei bei jeder weiteren Betätigung der älteste Messwert des jeweiligen Zeitintervalls gelöscht und durch einen neuen Messwert des Zeitintervalls zur Mittelwertbildung ersetzt wird. Der Ersatz der Messwerte durch jeweils neue Messwerte bei der Mittelwertbildung wird auch als so genannter Ringbuffer bezeichnet. Ein Fehler wird ausgegeben bzw. gesetzt und ein vorbestimmter zulässiger Vorgabewert bzw. Parameter für die Differenzdrehzahl bei der Betätigung der Differentialsperre reduziert, wenn der ermittelte Mittelwert einen vorbestimmten dritten Grenzwert Parameter 3 überschreitet.

Im Rahmen des zweiten Überwachungsalgorithmus Funktion 2 wird die Aktivierungszeit bzw. das Zeitintervall gemessen, wobei ein Zähler bzw. Counter inkrementiert wird, wenn der Messwert des Zeitintervalls über einem Limit bzw. einem vierten Grenzwert Parameter 4 liegt. Bei einer vorbestimmten Anzahl von Messwerten der Zeitintervalle bzw. der Zuschaltzeit unterhalb des vierten Grenzwertes Parameter 4 wird der Zähler wieder dekrementiert. Dies bedeutet, wenn eine bestimmte Anzahl an guten Aktivierungen der Differentialsperre durchgeführt wird, wird der Zähler wieder gelöscht. Ein Fehler wird im Rahmen des zweiten Überwachungsalgorithmus Funktion 2 gesetzt und der vorbestimmte zulässige Vorgabewert für die Differenzdrehzahl N_Diff an der Differentialsperre reduziert, wenn der Zähler einen fünften Grenzwert Parameter 5 überschreitet.

### Bezugszeichen

- N_Diff: Differenzdrehzahl
- Parameter 1: erster Grenzwert
- Parameter 2: zweiter Grenzwert
- Parameter 3: dritter Grenzwert
- Parameter 4: vierter Grenzwert
- Parameter 5: fünfter Grenzwert
- Funktion 1: erster Überwachungsalgorithmus
- Funktion 2: zweiter Überwachungsalgorithmus
- Zuschaltzeit: Zeitintervall

## Patentansprüche

1. Verfahren zum Überwachen einer automatisch betätigten formschlüssigen Differentialsperre eines Verteilergetriebes eines Fahrzeuges, wobei während eines Zeitintervalls zwischen dem Aktivierungszeitpunkt und dem Erreichen des geschlossenen Zustandes der Differentialsperre die an der Differentialsperre auftretende Differenzdrehzahl (N_Diff) ausgewertet wird, **dadurch gekennzeichnet, dass** ein erster Überwachungsalgorithmus (Funktion 1) aktiviert wird, wenn die gemessene Differenzdrehzahl (N_Diff) an der Differentialsperre größer als ein erster Grenzwert (Parameter 1) jedoch kleiner als ein zweiter Grenzwert (Parameter 2) ist.

2. Verfahren nach Anspruch 1, **dadurch gekennzeichnet, dass** die Überwachung beendet wird, wenn die gemessene Differenzdrehzahl (N_Diff) an der Differentialsperre kleiner als ein erster Grenzwert (Parameter 1) ist.

3. Verfahren nach einem der vorangehenden Ansprüche, **dadurch gekennzeichnet, dass** ein zweiter Überwachungsalgorithmus (Funktion 2) aktiviert wird, wenn die gemessene Differenzdrehzahl (N_Diff) an der Differentialsperre größer als ein zweiter Grenzwert (Parameter 2) ist.

4. Verfahren nach einem der vorangehenden Ansprüche, **dadurch gekennzeichnet, dass** bei dem ersten Überwachungsalgorithmus (Funktion 1) bei jeder Betätigung der Differentialsperre das Zeitintervall gemessen und aufaddiert wird, wobei nach dem Erfassen einer vorbestimmten Anzahl von Messwerten ein Mittelwert gebildet wird, wobei bei jeder weiteren Betätigung der älteste Messwert des jeweiligen Zeitintervalls gelöscht und durch einen neuen Messwert des Zeitintervalls zur Mittelwertbildung ersetzt wird, und wobei ein Fehler gesetzt wird und ein vorbestimmter zulässiger Vorgabewert für die Differenzdrehzahl (N_Diff) der Differentialsperre reduziert wird, wenn der ermittelte Mittelwert einen dritten Grenzwert (Parameter 3) überschreitet.

5. Verfahren nach Anspruch 3 oder 4, **dadurch gekennzeichnet, dass** bei dem zweiten Überwachungsalgorithmus (Funktion 2) das Zeitintervall gemessen wird, wobei ein Zähler inkrementiert wird, wenn der Messwert des Zeitintervalls über einem vierten Grenzwert (Parameter 4) liegt.

6. Verfahren nach Anspruch 5, **dadurch gekennzeichnet, dass** bei einer vorbestimmten Anzahl von Messwerten der Zeitintervalle unterhalb des vierten Grenzwertes (Parameter 4) der Zähler wieder dekrementiert wird.

7. Verfahren nach Anspruch 5 oder 6, **dadurch gekennzeichnet, dass** ein Fehler gesetzt wird und der vorbestimmte zulässige Vorgabewert für die Differenzdrehzahl (N_Diff) an der Differentialsperre reduziert wird, wenn der Zähler einen fünften Grenzwert (Parameter 5) überschreitet.

## Claims

1. Method for monitoring an automatically activated positively engaging differential lock of a transfer case of a vehicle, wherein the differential rotational speed (N_Diff) which occurs at the differential lock is evaluated during a time interval between the activation time and the point when the closed state of the differential lock is reached, **characterized in that** a first monitoring algorithm (function 1) is activated if the measured differential rotational speed (N_Diff) at the differential lock is higher than a first limiting value (parameter 1) but lower than a second limiting value (parameter 2).

2. Method according to Claim 1, **characterized in that** the monitoring is ended if the measured differential rotational speed (N_Diff) at the differential lock is lower than a first limiting value (parameter 1).

3. Method according to one of the preceding claims, **characterized in that** a second monitoring algorithm (function 2) is activated if the measured differential rotational speed (N_Diff) at the differential lock is higher than a second limiting value (parameter 2).

4. Method according to one of the preceding claims, **characterized in that** in the case of the first monitoring algorithm (function 1) the time interval is measured and added at every activation of the differential lock, wherein after the sensing of a predetermined number of measured values a mean value is formed, wherein at every further activation the oldest measured value of the respective time interval is deleted and is replaced by a new measured value of the time interval for forming mean values, and wherein an error is set and a predetermined permissible specification value for the differential rotational speed (N_Diff) of the differential lock is reduced if the determined mean value exceeds a third limiting value (parameter 3).

5. Method according to Claim 3 or 4, **characterized in that** in the case of the second monitoring algorithm (function 2) the time interval is measured, wherein a counter is incremented if the measured value of the time interval is above a fourth limiting value (parameter 4).

6. Method according to Claim 5, **characterized in that** the counter is decremented again when there is a predetermined number of measured values of the time intervals below the fourth limiting value (parameter 4).

7. Method according to Claim 5 or 6, **characterized in that** an error is set and the predetermined permissible specification value for the differential rotational speed (N_Diff) at the differential lock is reduced if the counter exceeds a fifth limiting value (parameter 5).

## Revendications

1. Procédé de surveillance d'un blocage de différentiel à complémentarité de formes actionné automatiquement d'une boîte de transfert d'un véhicule, la vitesse de rotation différentielle (N_Diff) qui se produit au niveau du blocage de différentiel étant analysée pendant un intervalle de temps entre l'instant d'activation et le moment où l'état fermé du blocage de différentiel est atteint, **caractérisé en ce qu'**un premier algorithme de surveillance (Fonction 1) est activé lorsque la vitesse de rotation différentielle (N_Diff) mesurée au niveau du blocage de différentiel est supérieure à une première valeur limite (Paramètre 1), mais toutefois inférieure à une deuxième valeur limite (Paramètre 2).

2. Procédé selon la revendication 1, **caractérisé en ce que** la surveillance prend fin lorsque la vitesse de rotation différentielle (N_Diff) mesurée au niveau du blocage de différentiel est inférieure à une première valeur limite (Paramètre 1).

3. Procédé selon l'une des revendications précédentes, **caractérisé en ce qu'**un deuxième algorithme de surveillance (Fonction 2) est activé lorsque la vitesse de rotation différentielle (N_Diff) mesurée au niveau du blocage de différentiel est supérieure à une deuxième valeur limite (Paramètre 2).

4. Procédé selon l'une des revendications précédentes, **caractérisé en ce qu'**avec le premier algorithme de surveillance (Fonction 1), l'intervalle de temps est mesuré et additionné à chaque actionnement du blocage de différentiel, une valeur moyenne étant formée après l'acquisition d'un nombre prédéterminé de valeurs mesurées, à chaque nouvel actionnement la valeur mesurée la plus ancienne de l'intervalle de temps respectif étant effacée et remplacée par une nouvelle valeur mesurée de l'intervalle de temps en vue de former la valeur moyenne, et une erreur étant déclarée et une valeur de consigne admissible prédéterminée pour la vitesse de rotation différentielle (N_Diff) du blocage de différentiel étant réduite lorsque la valeur moyenne déterminée dépasse une troisième valeur limite (Paramètre 3).

5. Procédé selon la revendication 3 ou 4, **caractérisé en ce qu'**avec le deuxième algorithme de surveillance (Fonction 2), l'intervalle de temps est mesuré, un compteur étant incrémenté lorsque la valeur mesurée de l'intervalle de temps est supérieure à une quatrième valeur limite (Paramètre 4).

6. Procédé selon la revendication 5, **caractérisé en ce qu'**en présence d'un nombre prédéterminé de valeurs mesurées de l'intervalle de temps au-dessous de la quatrième valeur limite (Paramètre 4), le compteur est de nouveau décrémenté.

7. Procédé selon la revendication 5 ou 6, **caractérisé en ce qu'**une erreur est déclarée et la valeur de consigne admissible prédéterminée pour la vitesse de rotation différentielle (N_Diff) au niveau du blocage de différentiel est réduite lorsque le compteur dépasse une cinquième valeur limite (Paramètre 5).
